# EUROPÄISCHE PATENTSCHRIFT

(11) **EP 1 404 970 B1**
(45) Veröffentlichungstag und Bekanntmachung des Hinweises auf die Patenterteilung: **21.06.2006**
(21) Anmeldenummer: 02714006.0
(22) Anmeldetag: 15.02.2002
(51) Int. Cl.: F04B 11/00, F04B 1/04

(54) **KOLBENPUMPE**
PISTON PUMP
POMPE A PISTON

(30) Priorität: 30.06.2001 DE 10131763
(43) Veröffentlichungstag der Anmeldung: 07.04.2004
(73) Patentinhaber: ROBERT BOSCH GMBH, 70442 Stuttgart (DE)
(72) Erfinder: SCHEPP, Rene, 71336 Waiblingen (DE); MARQUARDT, Werner-Karl, 71706 Markgroeningen (DE); SCHULLER, Wolfgang, 74343 Sachsenheim (DE); FEINAUER, Jochen, 74632 Neuenstein (DE); FOERCH, Dirk, 74196 Neuenstadt/Stein (DE)
(86) Internationale Anmeldenummer: PCT/DE2002/000530
(87) Internationale Veröffentlichungsnummer: WO 2003/004872

(56) Entgegenhaltungen:
- DE-A- 19 538 615
- DE-A- 19 753 909
- DE-A- 19 928 913
- FR-A- 2 203 485
- US-A- 4 729 360
- US-A- 6 062 830

## Beschreibung

### Stand der Technik

Die Erfindung betrifft eine Kolbenpumpe nach dem Oberbegriff des Anspruchs 1. Die Kolbenpumpe ist insbesondere für eine hydraulische, schlupfgeregelte Fahrzeugbremsanlage vorgesehen.

Die deutsche Offenlegungsschrift DE 42 26 646 A1 (und US-A-6 062 830) zeigen eine hydraulische Fahrzeugbremsanlage mit einer Pumpe, bei der stromabwärts hinter einem Auslaßrückschlagventil der Pumpe ein Druckdämpfer vorgesehen ist. Damit der in der Druckleitung vorgesehene Druckdämpfer eine ausreichende Wirkung aufweist, muß der Druckdämpfer entsprechend groß dimensioniert sein. Wegen dem Druckdämpfer baut die bekannte Fahrzeugbremsanlage ziemlich groß, und es ist ein erhöhter Herstellungsaufwand erforderlich. Beim Betätigen des Bremspedals wird ein Teil des über den Fahrerfuß verdrängten Druckmediums in den Druckdämpfer gedrückt. Weil der Druckdämpfer für eine ausreichende Wirkung relativ groß sein muß, muß bei einer Betätigung des Bremspedals relativ viel Druckmedium verdrängt werden, was durch entsprechendes Dimensionieren der an diesem Vorgang beteiligten Bauteile berücksichtigt werden muß. Dadurch baut die bekannte Bremsanlage ziemlich groß.

### Vorteile der Erfindung

Die erfindungsgemäße Kolbenpumpe mit den Merkmalen des Anspruchs 1 hat den Vorteil, daß die Pulsationsglättungseinrichtung die ansonsten bei einer Kolbenpumpe entstehenden Druckpulsationen und Druckwellen sehr wirkungsvoll beseitigt. Wegen der hohen Wirksamkeit der Pulsationsglättungseinrichtung kann diese ziemlich klein gebaut werden und trotzdem erhält man eine ausreichende Wirkung. Weil die Pulsationsglättungseinrichtung ziemlich klein gebaut werden kann, erhält man den Vorteil, daß die Kolbenpumpe insgesamt ziemlich klein baut. Dies hat den Vorteil einer insgesamt klein bauenden Fahrzeugbremsanlage. Weil die Pulsationsglättungseinrichtung aufgrund ihrer guten Wirksamkeit klein baut, insbesondere kann das Speichervolumen ziemlich klein gehalten werden, ergibt sich der Vorteil, daß bei einer Betätigung des Bremspedals von der Pulsationsglättungseinrichtung höchstens ein unwesentlicher Teil des vom Fahrerfuß unter Druck gesetzten Druckmediums aufgenommen wird, so daß von der Pulsationsglättungseinrichtung praktisch keine negative Auswirkung auf die Funktionsweise der Fahrzeugsbremsanlage während einer Betätigung des Bremspedals hervorgerufen wird.

Weil die Pulsationsglättungseinrichtung ziemlich klein baut, insbesondere, weil das Speichervolumen der Pulsationsglättungseinrichtung ziemlich klein gehalten werden kann, ist es vorteilhafterweise auch nicht erforderlich, daß stromabwärts hinter der Pulsationsglättungseinrichtung ein Rückschlagventil vorgesehen werden müßte. Aufgrund dieses nicht erforderlichen Rückschlagventils erhält man den Vorteil, daß der Herstellungsaufwand und die Baugröße der erfindungsgemäßen Fahrzeugbremsanlage klein gehalten werden kann; und man erhält den Vorteil, daß das nicht erforderlich zusätzliche Rückschlagventil auch nicht defekt werden kann.

Die elastisch federnde Membrane ist insbesondere für höhere Drücke und für hochfrequente Schwingungen zuständig und kann diese besonders wirkungsvoll beseitigen. Der elastisch nachgiebige Körper ist insbesondere für Bereiche mit niedrigem Druck und für niederfrequente Schwingungen zuständig und kann diese besonders wirkungsvoll unterdrücken. Aufgrund der kombinatorischen Wirkung der elastisch federnden Membrane mit dem elastisch nachgiebigen Körper erhält man den Vorteil, dass in einem großen Druckbereich und in einem großen Frequenzbereich eine sehr wirkungsvolle Schwingungsdämpfung und Dämpfung von Druckpulsationen erreicht wird. Die Kolbenpumpe kann deshalb so ausgelegt werden, dass praktisch während des gesamten Betriebs der Kolbenpumpe eine wirkungsvolle Pulsationsdämpfung und Schwingungsdämpfung erreicht wird.

Weil die elastisch federnde Membrane, die zwar relativ steif ist, aber aufgrund ihrer Lagerung in dem elastisch nachgiebigen Körper auch bei kleinen Drücken und bei niederfrequenten Schwingungen nachgibt, wird dadurch der Effekt des elastisch nachgiebigen Körpers wesentlich erhöht, denn obwohl bei kleinen Druckpulsationen und niedrigen Drücken nur der elastisch nachgiebige Körper, aber praktisch kaum die elastisch federnde Membrane sich verformt, erhält man trotzdem auch im Bereich niedriger Drücke ein relativ weites Nachgeben und somit eine relativ große Volumenänderung in der Druckkammer, in der die Druckpulsationen abgebaut werden, auch dann, wenn der elastisch nachgiebige Körper selbst nur ein insgesamt kleines Volumen aufweist. Mit anderen Worten, auch bei Verwendung eines elastisch nachgiebigen Körpers mit einem kleinen Volumen kann trotzdem insgesamt auch bei niedrigen Drücken eine relativ große Volumenänderung in der Druckkammer und somit eine wirkungsvolle Dämpfung von Schwingungen erreicht werden.

Wegen der guten Dämpfung der Druckschwingungen durch die Pulsationsglättungseinrichtung erhält man den Vorteil, daß wesentlich weniger Geräusche entstehen und die Dauerhaltbarkeit der Kolbenpumpe ist wesentlich besser.

### Zeichnung

Die Zeichnung zeigt einen Ausschnitt eines Hydraulikblocks einer schlupfgeregelten Fahrzeugbremsanlage im Bereich einer Kolbenpumpe der Fahrzeugbremsanlage. Die dargestellte Schnittebene verläuft als Längsschnitt durch die Kolbenpumpe.

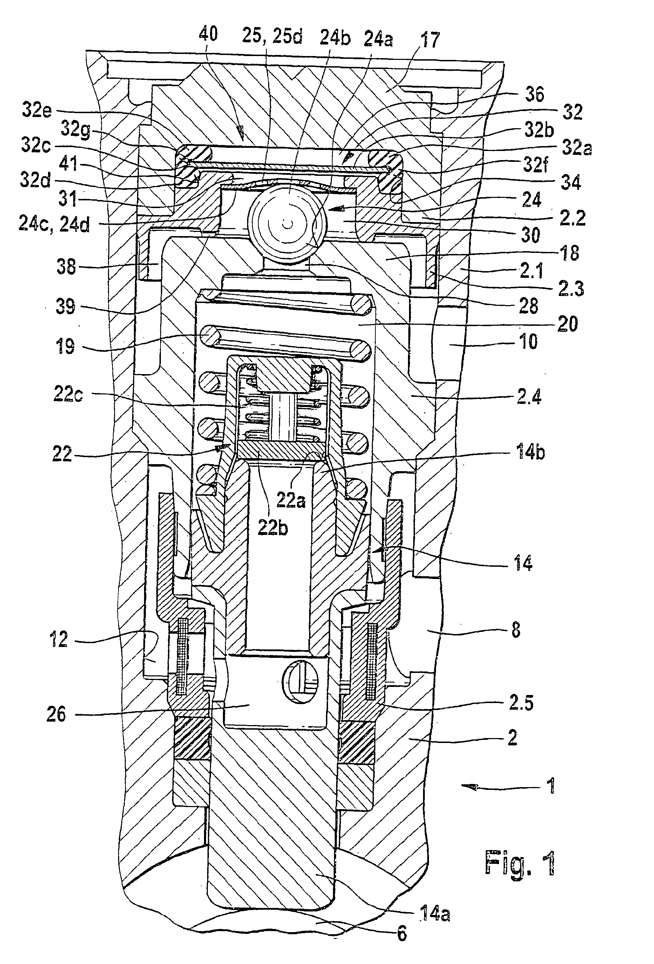

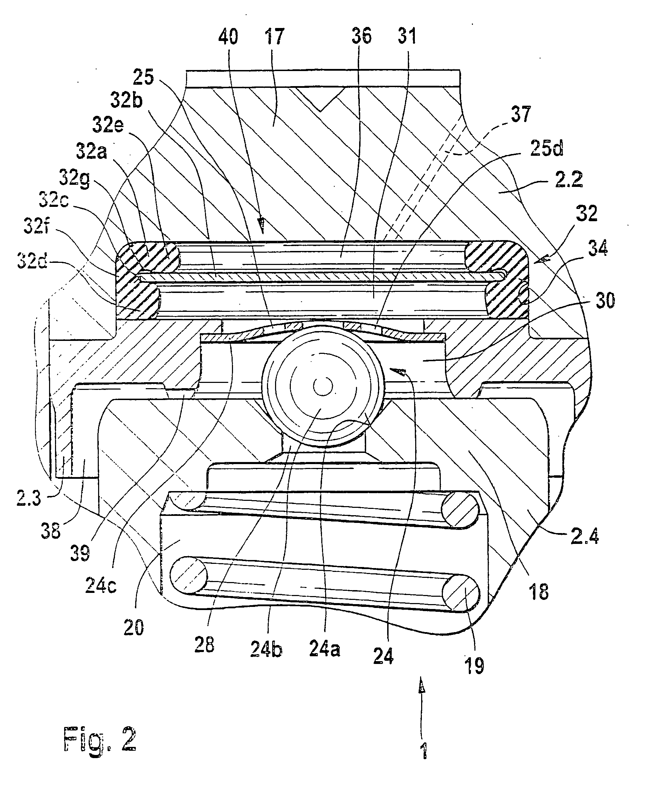

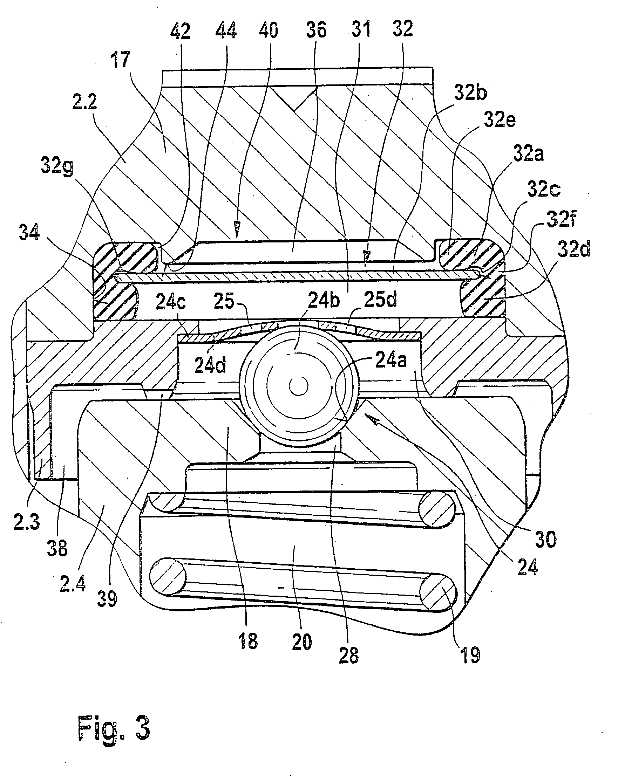

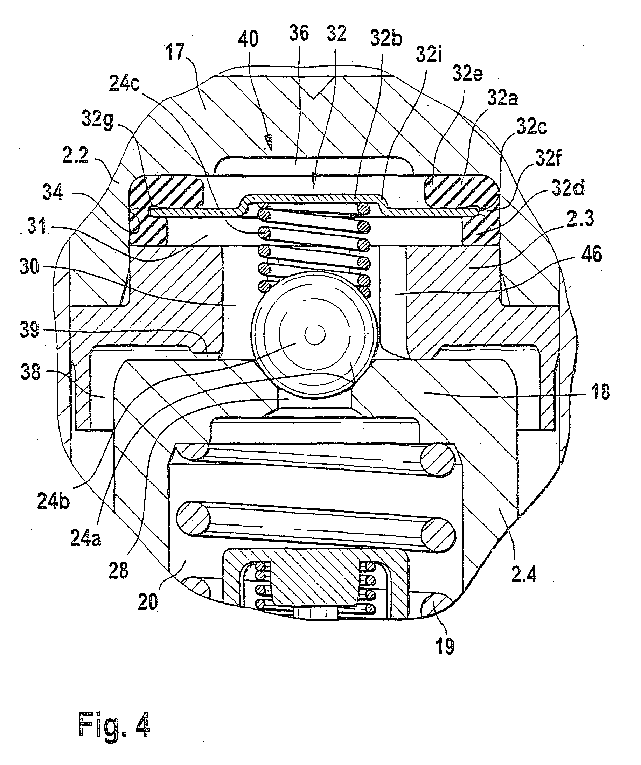

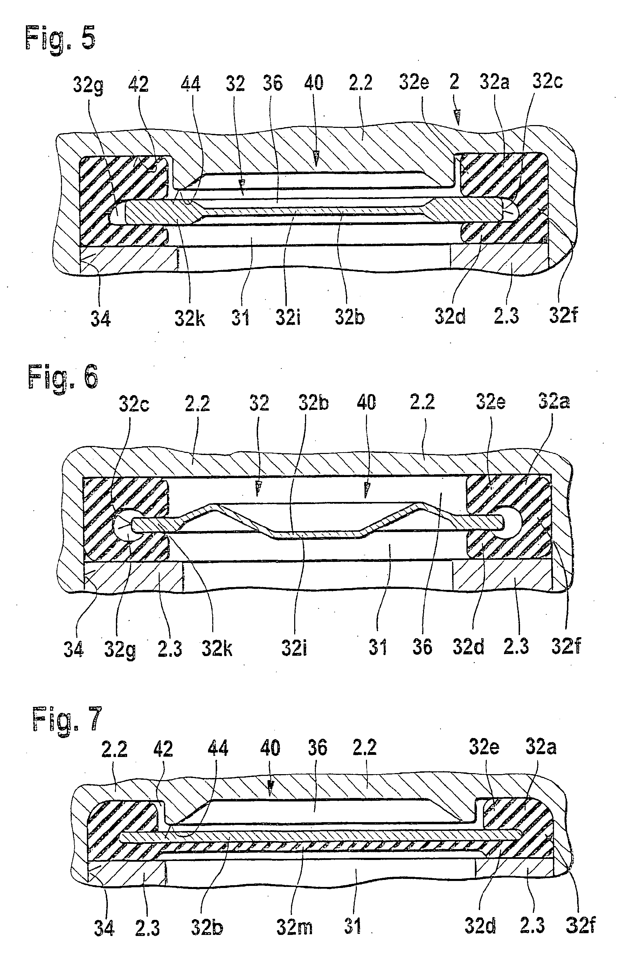

Die Figur 1 zeigt einen Längsschnitt durch ein bevorzugt ausgewähltes, besonders vorteilhaftes Ausführungsbeispiel, die Figur 2 eine Ausschnittvergrößerung eines abgewandelten Ausführungsbeispiels, die Figur 3 eine Ausschnittvergrößerung eines abgewandelten, weiteren Ausführungsbeispiels, die Figur 4 eine Ausschnittvergrößerung eines vierten, abgewandelten Ausführungsbeispiels, die Figur 5 eine Ausschnittvergrößerung eines fünften, abgewandelten Ausführungsbeispiels, die Figur 6 eine Ausschnittvergrößerung eines sechsten, abgewandelten Ausführungsbeispiels und die Figur 7 eine Ausschnittvergrößerung eines abgewandelten, weiteren Ausführungsbeispiels der Kolbenpumpe.

### Beschreibung der Ausführungsbeispiele

Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Kolbenpumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw.

EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren der Radbremszylinder aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

Die **Figur 1** zeigt ein erstes, besonders vorteilhaftes, bevorzugt ausgewahltes Ausführungsbeispiel.

Die Zeichnung zeigt eine Kolbenpumpe 1. Die Kolbenpumpe 1 ist in einem ausschnittweise geschnitten dargestellten Hydraulikblock der fahrzeugbremsanlage eingebaut. In dem Hydraulikblock können mehrere Kolbenpumpen 1 eingebaut sein. Der Hydraulikblock bildet ein Pumpengehäuse 2 der Kolbenpumpe 1. Das Pumpengehäuse 2 besteht beispielsweise aus einem gehäusefesten ersten Körper 2.1, einem gehäusefesten zweiten Körper 2.2, einem gehäusefesten dritten Körper 2.3, einem gehäusefesten vierten Körper 2.4 und einem gehäusefesten fünften Körper 2.5. Der gehäusefeste erste Körper 2.1 wird von dem Hydraulikblock der Fahrzeugbremsanlage gebildet. Der gehäusefeste vierte Körper 2.4 ist in den ersten Körper 2.1 eingesetzt und dient als Laufbuchse.

Die Kolbenpumpe 1 umfaßt die in das Pumpengehäuse 2 eingesetzte Laufbuchse, einen Exzenter 6, einen Zulaufanschluß 8 und einen Abströmkanal 10. In dem Pumpengehäuse 2 gibt es einen Einbauraum 12. Der Zulaufanschluß 8 und der Abströmkanal 10 verlaufen durch den Hydraulikblock bzw. durch das Pumpengehäuse 2. Von dem Abströmkanal 10 führen nicht dargestellte, sich verzweigende Leitungen über nicht dargestellte Hydraulikventile zu einem nicht dargestellten Hauptbremszylinder und zu nicht dargestellten Radbremszylindern.

Der als Laufbuchse dienende gehäusefeste vierte Körper 2.4 und ein Pumpenkolben 14 sind in den Einbauraum 12 eingesetzt. Der in dem Pumpengehäuse 2 verschiebbar gelagerte Pumpenkolben 14 hat ein dem Exzenter 6 zugewandtes Ende 14a und ein dem Exzenter 6 abgewandtes Ende 14b. Der Pumpenkolben 14 wird über den Exzenter 6 abwechselnd aufeinanderfolgend zu einem Saughub und einem Druckhub angetrieben.

Der in dem Pumpengehäuse 2 vorgesehene Einbauraum 12 wird nach außen hin von dem als Verschlußstück dienenden gehäusefesten zweiten Körper 2.2 abgeschlossen. Der gehäusefeste zweite Körper 2.2 hat einen nach außen gewandten stirnseitigen Verschlußstückboden 17. Der als Laufbuchse dienende vierte Körper 2.4 hat einen dem gehäusefesten zweiten Körper 2.2 zugewandten stirnseitigen Laufbuchsenboden 18. Eine sich an dem Laufbuchsenboden 18 und an dem Pumpenkolben 14 abstützende Rückstellfeder 19 hält das Ende 14a des Pumpenkolbens 14 in Anlage an dem Exzenter 6. Zwischen dem Laufbuchsenboden 18 und dem dem Exzenter 6 abgewandten Ende 14b des Pumpenkolbens 14 gibt es einen sich während eines Saughubs vergrößernden und sich während eines Druckhubs verkleinernden Kompressionsraum 20.

Die Kolbenpumpe 1 hat ein Einlaßventil 22. Das Einlaßventil 22 hat einen Ventilsitz 22a, einen Schließkörper 22b und eine Schließfeder 22c. Die Schließfeder 22c beaufschlagt den Schließkörper 22b gegen den am Pumpenkolben 14 vorgesehenen Ventilsitz 22a.

Die Kolbenpumpe 1 hat ein Auslaßventil 24. Das Auslaßventil 24 hat einen Ventilsitz 24a, einen Schließkörper 24b und eine Schließfeder 24c. Die Schließfeder 24c beaufschlagt den Schließkörper 24b gegen den gehäusefesten, beispielsweise am Laufbuchsenboden 18 vorgesehenen Ventilsitz 24a. Ein Ende der Schließfeder 24c stützt sich an dem Schließkörper 24a und ein Ende der Schließfeder 24c stützt sich an dem gehäusefesten dritten Körper 2.3 ab. Die Schließfeder 24c ist in Form einer Blattfeder 24d realisiert. Der Außenumfang der Blattfeder 24d stutzt sich an dem gehäusefesten dritten Körper 2.3 ab. Die Blattfeder 24d hat ein zentrisch in der Blattfeder 24d vorgesehenes Loch. Dieses Loch zentriert den in Form einer Kugel ausgebildeten Schließkörper 24b.

In der Schließfeder 24c ist ein Durchlaß 25 vorgesehen oder es sind mehrere Durchlässe 25 vorgesehenen. Der mindestens eine Durchlaß 25 ist vorzugsweise so groß dimensioniert sein, dass der Durchlaß 25 praktisch keine Drosselung für das Druckmedium bedeutet. Der mindestens eine Durchlaß 25 kann aber auch, je nach Anforderung an die Kolbenpumpe 1 und je nach Zweckmäßigkeit, so klein dimensioniert sein, dass der Durchlaß 25 für das hindurchströmende Medium eine Drosselung 25d bedeutet.

Ein Zulaufdurchlaß 26 führt vom Zulaufanschluß 8 zum Einlaßventil 22. Ein Durchlaß 28 führt vom Kompressionsraum 20 durch den Laufbuchsenboden 18 zum Auslaßventil 24. Der Ventilsitz 24a umgibt den Durchlaß 28.

Auf der dem Durchlaß 28 abgewandten Seite des Schließkörpers 24b gibt es einen Abströmraum 30. Oder anders ausgedrückt, der Abströmraum 30 ist der Raum, der sich stromabwärts an den Ventilsitz 24a anschließt. In dem ausgewählten Ausführungsbeispiel befindet sich der Abströmraum 30 zwischen dem Laufbuchsenboden 18 und der mehr oder weniger als Zwischenwand dienenden Blattfeder 24d.

Der Durchlaß 25 verbindet den Abströmraum 30 mit einer Druckkammer 31.

In dem gehäusefesten zweiten Körper 2.2 ist eine nachgiebige Wand 32 eingebaut. Die nachgiebige Wand 32 trennt die Druckkammer 31 gegen einen Gegenraum 36. In dem Gegenraum 36 befindet sich ein leicht komprimierbares Medium, insbesondere ein Gas, vorzugsweise Luft.

Wie das Ausführungsbeispiel zeigt, besteht die nachgiebige Wand 32 aus einem elastisch nachgiebigen Körper 32a und einer elastisch federnden Membrane 32b. Die Membrane 32b hat einen äußeren Außenumfang 32c. Der elastisch nachgiebige Körper 32a hat einen der Druckkammer 31 zugewandten, umlaufenden Schenkel 32d, einen dem Gegenraum 36 zugewandten, umlaufenden Schenkel 32e und einen die beiden Schenkel 32d und 32e zusammenhaltenden Rücken 32f. Zwischen den beiden Schenkeln 32d und 32e hat der elastisch nachgiebige Körper 32a eine umlaufende Tasche 32g. In die Tasche 32g ist die federnde Membrane 32b im Bereich ihres Außenumfangs 32c eingelegt. Die beiden Schenkel 32d, 32e umgreifen den Außenumfang 32c der Membrane 32b.

In dem gehäusefesten zweiten Körper 2.2 ist eine Ansenkung 34 vorgesehen. Die nachgiebige Wand 32 mit dem Körper 32a und der Membrane 32b ist in die Ansenkung 34 eingebaut. Der elastisch nachgiebige Körper 32a ist vorzugsweise aus Gummi oder aus einem Elastomerwerkstoff hergestellt. Der gehäusefeste dritte Körper 2.3 hat eine Abstufung, die so in die Ansenkung 34 eingreift, dass in fertig montiertem Zustand der elastisch nachgiebige Körper 32a der nachgiebigen Wand 32 in die Ansenkung 34 mit Vorspannung eingebaut ist. Der nachgiebige Körper 32a ist in axialer und in radialer Richtung mit Vorspannung eingebaut. Wegen der axialen Vorspannung des Körpers 32a kann aus der Druckkammer 31 in den Gegenraum 36 und auch in umgekehrter Richtung kein Druckmedium zwischen dem Körper 32a und dem gehäusefesten Körper 2.2, und auch kein Druckmedium zwischen dem elastisch nachgiebigen Körper 32a und dem Außenumfang 32c der Membrane 32b hindurchlecken.

Aus dem Abströmraum 30 führt ein Verbindungskanal 38 in den Abströmkanal 10. Im Verlauf des Verbindungskanals 38 ist eine Drossel 39 vorgesehen. Die Drossel 39 befindet sich vorzugsweise unmittelbar dort wo der Verbindungskanal 38 das Druckmedium aus dem Abströmraum 30 ableitet. Mit anderen Worten, die Drossel 39 befindet sich vorzugsweise sehr dicht im Bereich des Auslaßventils 24.

Die nachgiebige Wand 32 wird von dem in der Druckkammer 31 herrschenden Druck beaufschlagt. Der Druck in der Druckkammer 31 ist im wesentlichen gleich wie der Druck in dem Abströmraum 30. In dem Gegenraum 36 befindet sich vorzugsweise ein eingeschlossenes, hermetisch abgedichtetes Gasvolumen.

Der Abströmraum 30 ist über die Drossel 39 mit dem Abströmkanal 10 verbunden. Die Drossel 39 ist im Bereich des Auslaßventils 24 nahe am Auslaßventil 24 angeordnet. Mit Hilfe der Drossel 39 wird erreicht, daß die im Bereich des Auslaßventils 24 auftretenden Druckpulsationen innerhalb der Druckkammer 31 auf die nachgiebige Wand 32 konzentriert einwirken. Durch die nachgiebige Wand 32 werden Druckpulsationen am Entstehen gehindert, unmittelbar dort wo die Pulsationen entstehen würden, so daß sie sich nicht über die Drossel 39 hinaus in den Abströmkanal 10 fortpflanzen können.

Bei dem dargestellten Ausführungsbeispiel bilden der Abströmraum 30, die Druckkammer 31, die nachgiebige Wand 32, die den elastisch nachgiebigen Körper 32a und die elastisch federnde Membrane 32b umfaßt, der Gegenraum 36 und die Drossel 39 im Zusammenspiel miteinander eine hochwirksame, effektive Pulsationsglättungseinrichtung 40. Die Bauteile der Pulsationsglättungseinrichtung 40 sind vorzugsweise unmittelbar im Bereich des Auslaßventils 24 angeordnet. Dadurch kann die hydraulische Nachgiebigkeit der Pulsationsglättungseinrichtung 40 relativ klein gehalten werden. Dies hat den Vorteil, daß das hydraulische System in dem Abströmkanal 10 trotz erzielbarer sehr guter Pulsationsglättung auch ohne Verwendung eines zusätzlichen Rückschlagventils stromabwärts hinter der Pulsationsglättungseinrichtung 40 ziemlich steif gehalten werden kann.

Durch Einbauen der nachgiebigen Wand 32 und des Gegenraums 36 in den gehäusefesten Körper 2.2 erhält man den Vorteil, daß insgesamt wenig Bauteile benötigt werden und daß der Zusammenbau der Kolbenpumpe 1 ohne wesentlichen Mehraufwand geschehen kann. Der gehäusefeste Körper 2.2 ist über eine an sich bekannte Bördelverbindung druckdicht in den Einbauraum 12 eingebaut. Der Körper 2.2 dichtet den Hochdruckbereich der Kolbenpumpe 1 nach außen ab.

Die durch das Arbeiten des Pumpenkolbens 14 und des Auslaßventils 24 in dem Abströmraum 30 entstehenden Druckpulsationen wirken durch den Durchlaß 25 auch in der Druckkammer 31.

Druckpulsationen im Bereich relativ niedriger Drücke und im Bereich kleinen Drucks wird die Membrane 32b in Richtung des Gegenraums 36 verschoben. Dabei verformt sich im Wesentlichen nicht die elastisch federnde Membrane 32b, sondern es wird der Schenkel 32e des nachgiebigen Körpers 32a zusammengedrückt. Die Membrane 32b ist so steif, dass sie sich insbesondere praktisch nur im Bereich größerer Drücke verformt. Weil sich bei einer Verformung des Schenkels 32e auch die federnde Membrane 32b insgesamt bewegt, wird erreicht, dass mit relativ wenig Volumen des Schenkels 32e und bei relativ geringer Verformung des Schenkels 32e des nachgiebigen Körpers 32a sich eine relativ große Volumenänderung in der Druckkammer 31 ergibt. Dies hat den Vorteil, dass auch bei relativ kleinen Drücken und bei relativ niederfrequenten Schwingungen bereits mit einem sehr kleinvolumigen nachgiebigen Körper 32a eine hochwirksame Beseitigung von Druckpulsationen erreicht werden kann. Dies ermöglicht, dass die Kolbenpumpe 1 insgesamt klein gebaut werden kann.

Die Membrane 32b ist vorzugsweise eine relativ dünne plattenförmige Scheibe aus einem federnden Werkstoff, vorzugsweise Federstahl. Die Elastizität und Nachgiebigkeit der federnden Membrane 32b ist so dimensioniert, dass bei großen Drücken und hochfrequenten Druckpulsationen in der Druckkammer 31, bei einer schlagartigen Druckerhöhung, die Membrane 32b durch Verbiegen in Richtung des Gegenraums 36 ausweicht, und bei hochfrequentem schlagartigen Druckabsenken in der Druckkammer 31 federt die Membrane 32b zurück in Richtung der Druckkammer 31. Dadurch wird erreicht, dass auch hochfrequente Druckpulsationen unmittelbar im Bereich kurz hinter dem Ventilsitz 24a geglättet werden.

Insbesondere im Bereich hoher Drücke und im Bereich hochfrequenter Schwingungen ist der Schenkel 32e des nachgiebigen Körpers 32a komprimiert, so dass eine weitere Verformung des Schenkels 32e im Wesentlichen nicht mehr gegeben ist, sondern bei hochfrequenten Schwingungen und hohen Drücken erfolgt eine Volumenänderung in der Druckkammer 31 durch ein Durchbiegen und damit durch eine Verformung der elastisch federnden Membrane 32b in Richtung des Gegenraums 36. Das heißt, die Membrane 32b wird in Richtung des Gegenraums 36 in sich durchgebogen.

Mit der dargestellten nachgiebigen Wand 32, die aus dem elastisch nachgiebigen Körper 32a und der elastisch federnden Membrane 32b besteht, wird erreicht, dass mit sehr kleinen Bauteilen eine hochwirksame Druckpulsationsglättung erreicht werden kann.

Weil der elastisch nachgiebige Körper 32a der nachgiebigen Wand 32 auch für eine Abdichtung zwischen der Druckkammer 31 und dem Gegenraum 36 sorgt, kann der Gegenraum 36 gut abgedichtet werden, ohne dass dazu ein zusätzliches Bauteil benötigt würde.

Die Verwendung einer Blattfeder 24d als Schließfeder 24c ergibt eine gute Führung des Schließkörpers 24b. Dies ist eine weitere Maßnahme zum zusätzlichen Reduzieren von Pulsationen im Hochdruckbereich der Kolbenpumpe 1.

An den gehäusefesten Körper 2.3 ist ein umlaufender Absatz 41 angeformt. Der Absatz 41 ermöglicht eine gute Kammerung des Schenkels 32d des elastischen Körpers 32a, und der Absatz 41 ermoglicht ein besonders kleines Bauvolumen der Kolbenpumpe 1.

Die **Figur 2** zeigt eine Ausschnittvergrößerung eines besonders vorteilhaften, bevorzugt ausgewählten, abgewandelten Ausführungsbeispiels.

In allen Figuren sind gleiche oder gleichwirkende Teile mit denselben Bezugszeichen versehen. Sofern nichts Gegenteiliges erwähot bzw. in der Zeichnung dargestellt ist, gilt das anhand eines der Figuren Erwähnte und Dargestellte auch bei den anderen Figuren. Sofern sich aus den Erläuterungen nichts anderes ergibt, sind die Einzelheiten der einzelnen Ausführungsbeispiele und der verschiedenen Figuren miteinander kombinierbar.

In Abweichung zur Figur 1 ist bei dem in der Figur 2 dargestellten Ausführungsbeispiel der Absatz 41 weggelassen.

Es ist wahlweise möglich, daß der Gegenraum 36 dicht verschlossen oder über eine in der Figur 2 gestrichelt dargestellte, kleine Öffnung 37 mit der Atmosphäre verbunden ist.

Die **Figur 3** zeigt eine Ausschnittvergrößerung eines besonders vorteilhaften, bevorzugt ausgewählten, abgewandelten, weiteren Ausführungsbeispiels.

Bei dem in der Figur 3 dargestellten Ausführungsbeispiel ist in der in dem zweiten Körper 2.2 vorgesehenen Ansenkung 34 stirnseitig eine umlaufende Nut 42 angebracht. Die Nut 42 sorgt für eine zuverlässige Aufnahme des Schenkels 32e des elastisch nachgiebigen Körpers 32a.

Zusätzlich ist am stirnseitigen Ende der Ansenkung 34 des gehäusefesten zweiten Körpers 2.2 ein gehäusefester Anschlag 44 vorgesehen. Der Anschlag 44 ist vorzugsweise umlaufend und befindet sich vorzugsweise im Bereich dort wo der Schenkel 32e des nachgiebigen Körpers 32a seinen Innenumfang hat. Bei großem Druck in der Druckkammer 31 stützt sich die elastisch federnde Membrane 32b an dem Anschlag 44 ab. Dadurch wird erreicht, dass auch bei sehr hohem Druck in der Druckkammer 31 der Schenkel 32e des elastisch nachgiebigen Körpers 32a vor zu großer Kompression und damit vor einer Überlastung geschützt ist.

Der Anschlag 44 ist in der Nähe des Außenumfangs 32c der Membrane 32b vorgesehen. Im radial inneren Bereich der Membrane 32b berührt die Membrane 32b den Anschlag 44 nicht. Dadurch wird erreicht, dass auch bei hohen Drücken und hochfrequenten Schwingungen die Membrane 32b durch den Anschlag 44 nicht behindert wird. Somit bleibt bei jedem Druck und jeder Frequenz die Pulsationsdämpfung gewährleistet.

Die **Figur 4** zeigt eine Ausschnittvergrößerung eines besonders vorteilhaften, bevorzugt ausgewählten, abgewandelten weiteren Ausführungsbeispiels.

Bei der in der Figur 4 beispielhaft dargestellten Kolbenpumpe ist die elastisch federnde Membrane 32b topfartig bzw. hutartig vorgeformt. Dadurch wird eine gute Aufnahme für die Schließfeder 24c des Auslaßventils 24 bewirkt, und es wird eine verbesserte und den auftretenden Drücken noch besser angepaßte Elastizität der Membrane 32b erreicht.

Hydraulisch gesehen, können der Abströmraum 30 und die Druckkammer 31 wie ein einziger zusammenhängender Raum betrachtet werden.

An dem gehäusefesten Körper 2.3 sind beispielsweise drei den Schließkörper 24b führende Führungsrippen 46 angeformt.

Die **Figur 5** zeigt eine Ausschnittvergrößerung eines besonders vorteilhaften, bevorzugt ausgewählten, abgewandelten weiteren Aus fuhrungsbeispiels.

Bei der in der Figur 5 dargestellten Ausführungsform hat die elastisch federnde Membrane 32b einen radial inneren Bereich 32i und einen radial äußeren, umlaufenden Bereich 32k. wie man der Zeichnung deutlich entnehmen kann, ist der umlaufende Bereich 32k wesentlich dicker als der innere Bereich 32i der Membrane 32b.

Weil der innere Bereich 32i der Membrane 32b ziemlich dünn ist, kann die Membrane 32b gut schwingen. Weil der umlaufende, äußere Bereich 32k ziemlich dick ist, werden, dort wo die Membrane 32b im elastischen Körper 32a gehalten wird, Schwingungsverformungen der Membrane 32b vermieden. Dies trägt zu einer guten Abdichtung bei.

Die **Figur 6** zeigt eine Ausschnittvergrößerung eines besonders vorteilhaften, bevorzugt ausgewählten, abgewandelten weiteren Ausführungsbeispiels.

Bei der in der Figur 6 ausschnittsweise dargestellten Ausführungsvariante der Kolbenpumpe 1 ist der radial innere Bereich 32i der Membrane 32b in Schwingungsrichtung vorverformt. Durch mehr oder weniger starkes Vorverformen der Membrane 32b in Schwingungsrichtung kann die Schwingungsfähigkeit der Membrane 32b je nach Erfordernis angepaßt werden.

Die **Figur 7** zeigt ausschnittsweise ein weiteres bevorzugt ausgewähltes, besonders vorteilhaftes Ausführungsbeispiel der Kolbenpumpe 1.

Der elastisch nachgiebige Körper 32a kann beispielsweise auch auf die federnde Membrane 32b aufvulkanisiert sein kann. Es ist auch möglich, dass die federnde Membrane 32b mit dem elastisch nachgiebigen Körper 32a umspritzt ist.

Wie die Figur 7 zeigt, kann die gesamte, der Druckkammer 31 zugewandte Stirnseite der Membrane 32b mit dem elastisch nachgiebigem Körper 32a beschichtet sein. Die der Druckkammer 31 zugewandte Stirnseite der Membrane 32b trägt eine Beschichtung 32m. Die Beschichtung 32m kann wahlweise auch auf beiden Stirnseiten der Membrane 32b oder aber nur auf der dem Gegenraum 36 zugewandten Stirnseite der Membrane 32b vorgesehen sein. Die Beschichtung 32m ist einstückig mit dem elastisch nachgiebigen Körper 32a und verbindet über die gesamte Stirnseite der Membrane 32b ohne Unterbrechung den Schenkel 32d. Dadurch ist zwischen der Membrane 32b und dem elastisch nachgiebigen Körper 32a eine absolut dichte Abdichtung gewährleistet.

## Patentansprüche

1. Kolbenpumpe mit einem in einem Pumpengehäuse (2) verschiebbar gelagerten Pumpenkolben (14), mit einem Einlaßventil (22), mit einem Auslaßventil (24), mit einem zwischen dem Einlaßventil (22) und dem Auslaßventil (24) in dem Pumpengehäuse (2) vorgesehenen Kompressionsraum (20), der sich bei einem Saughub des Pumpenkolbens (14) vergrößert und bei einem Druckhub des Pumpenkolbens (14) verkleinert, mit einer Druckkammer (31) stromabwärts hinter dem Auslaßventil (24) und mit einer die Druckkammer (31) gegen einen Gegenraum (36) begrenzenden nachgiebigen Wand (32, 32a, 32b), wobei ein Druck in der Druckkammer (31) die nachgiebige Wand (32, 32a, 32b) beaufschlagt, **dadurch gekennzeichnet, daß** die nachgiebige Wand (32, 32a, 32b) eine in einem elastisch nachgiebigen Körper (32a) gelagerte elastisch federnde Membrane (32b) aufweist und daß der elastisch nachgiebigen Körper (32a) aus einem gummielastischen Werkstoff und die Membrane (32b) aus einem federelastischen Werkstoff besteht, wobei der gummielastische Werkstoff wesentlich weicher als der federelastische Werkstoff ist.

2. Kolbenpumpe nach Anspruch 1, **dadurch gekennzeichnet, daß** die Druckkammer (31) und die nachgiebige Wand (32, 32a, 32b) im Bereich des Auslaßventils (24) angeordnet sind.

3. Kolbenpumpe nach Anspruch 1 oder 2, **dadurch gekennzeichnet, daß** die Druckkammer (31) stromabwärts hinter dem Auslaßventil (24) vorgesehen ist.

4. Kolbenpumpe nach einem der Ansprüche 1 bis 3, **dadurch gekennzeichnet, daß** die nachgiebige Wand (32, 32a, 32b) in einem gehäusefesten Körper (2, 2.2, 2.3) gelagert ist und daß der elastisch nachgiebige Körper (32a) zwischen der elastisch federnden Membrane (32b) und dem gehäusefesten Körper (2, 2.2, 2.3) abdichtet.

5. Kolbenpumpe nach einem der Ansprüche 1 bis 4, **dadurch gekennzeichnet, daß** der elastisch nachgiebige Körper (32a) ringförmig an einem Außenumfang (32c) der elastisch federnden Membrane (32b) angeordnet ist.

6. Kolbenpumpe nach Anspruch 5, **dadurch gekennzeichnet, daß** die elastisch federnde Membrane (32b) eine erste Stirnseite und eine zweite Stirnseite hat und daß der elastisch nachgiebige Körper (32a) im Bereich des Außenumfangs (32c) der elastisch federnden Membrane (32b) den Außenumfang (32c) bis in den Bereich mindestens einer der beiden Stirnseiten der elastisch federnden Membrane (32b) umgreift.

7. Kolbenpumpe nach einem der Ansprüche 1 bis 6, **dadurch gekennzeichnet, daß** ein Teilbereich der nachgiebigen Wand (32, 32a, 32b) an einem gehäusefesten Anschlag (44) zur Anlage kommt.

8. Kolbenpumpe nach einem der Ansprüche 1 bis 7, **dadurch gekennzeichnet, daß** die Membrane (32b) im Bereich außerhalb ihrer Lagerung in dem elastisch nachgiebigen Körper (32a) eine kleinere Dicke hat als im Bereich ihrer Lagerung in dem elastisch nachgiebigen Körper (32a).

9. Kolbenpumpe nach einem der Ansprüche 1 bis 8, **dadurch gekennzeichnet, daß** die Membrane (32b) in Schwingungsrichtung vorverformt ist.

10. Kolbenpumpe nach einem der Ansprüche 1 bis 9, **dadurch gekennzeichnet, daß** stromabwärts hinter dem Auslaßventil (24) ein Abströmraum (30) und stromabwärts hinter dem Abströmraum (30) eine Drossel (39) vorgesehen sind.

11. Kolbenpumpe nach einem der Ansprüche 1 bis 10, **dadurch gekennzeichnet, daß** das Auslaßventil (24) einen Ventilsitz (24a), einen Schließkörper (24b) und eine den Schließkörper (24b) gegen den Ventilsitz (24a) beaufschlagende Blattfeder (24d) aufweist.

12. Kolbenpumpe nach einem der Ansprüche 1 bis 11, **dadurch gekennzeichnet, daß** zwischen dem Auslaßventil (24) und der Druckkammer (31) eine Drosselung (25d) vorgesehen ist.

13. Kolbenpumpe nach Anspruch 12, **dadurch gekennzeichnet, daß** die Blattfeder (24d) die Drosselung (25d) ergibt.

14. Kolbenpumpe nach einem der Ansprüche 1 bis 13, **dadurch gekennzeichnet, daß** der Gegenraum (36) ein kompressibles Medium enthält.

## Claims

1. Piston pump, with a pump piston (14) mounted displaceably in a pump casing (2), with an inlet valve (22), with an outlet valve (24), with a compression space (20) which is provided between the inlet valve (22) and the outlet valve (24) in the pump casing (2) and which increases in size during a suction stroke of the pump piston (14) and decreases in size during a delivery stroke of the pump piston (14), with a pressure chamber (31) downstream of the outlet valve (24), and with a flexible wall (32, 32a, 32b) delimiting the pressure chamber (31) with respect to a counterspace (36), a pressure in the pressure chamber (31) acting upon the flexible wall (32, 32a, 32b), **characterized in that** the flexible wall (32, 32a, 32b) has an elastically resilient diaphragm (32b) mounted in an elastically flexible body (32a), and **in that** the elastically flexible body (32a) consists of an elastomeric material and the diaphragm (32b) of a resiliently elastic material, the elastomeric material being substantially softer than the resiliently elastic material.

2. Piston pump according to Claim 1, **characterized in that** the pressure chamber (31) and the flexible wall (32, 32a, 32b) are arranged in the region of the outlet valve (24).

3. Piston pump according to Claim 1 or 2, **characterized in that** the pressure chamber (31) is provided downstream of the outlet valve (24).

4. Piston pump according to one of Claims 1 to 3, **characterized in that** the flexible wall (32, 32a, 32b) is mounted in a body (2, 2.2, 2.3) fixed with respect to the casing, and **in that** the elastically flexible body (32a) seals off between the elastically resilient diaphragm (32b) and the body (2, 2.2, 2.3) fixed with respect to the casing.

5. Piston pump according to one of Claims 1 to 4, **characterized in that** the elastically flexible body (32a) is arranged annularly on an outer circumference (32c) of the elastically resilient diaphragm (32b).

6. Piston pump according to Claim 5, **characterized in that** the elastically resilient diaphragm (32b) has a first end face and a second end face, and **in that**, in the region of the outer circumference (32c) of the elastically resilient diaphragm (32b), the elastically flexible body (32a) surrounds the outer circumference (32c) into the region of at least one of the two end faces of the elastically resilient diaphragm (32b).

7. Piston pump according to one of Claims 1 to 6, **characterized in that** a part-region of the flexible wall (32, 32a, 32b) comes to bear against a stop (44) fixed with respect to the casing.

8. Piston pump according to one of Claims 1 to 7, **characterized in that** the diaphragm (32b) has a smaller thickness in the region outside its mounting in the elastically flexible body (32a) than in the region of its mounting in the elastically flexible body (32a).

9. Piston pump according to one of Claims 1 to 8, **characterized in that** the diaphragm (32b) is pre-deformed in the direction of oscillation.

10. Piston pump according to one of Claims 1 to 9, **characterized in that** an outflow space (30) is provided downstream of the outlet valve (24) and a throttle (39) is provided downstream of the outflow space (30).

11. Piston pump according to one of Claims 1 to 10, **characterized in that** the outlet valve (24) has a valve seat (24a), a closing body (24b) and a leaf spring (24d) loading the closing body (24b) against the valve seat (24a).

12. Piston pump according to one of Claims 1 to 11, **characterized in that** a throttling (25d) is provided between the outlet valve (24) and the pressure chamber (31).

13. Piston pump according to Claim 12, **characterized in that** the leaf spring (24d) affords the throttling (25d).

14. Piston pump according to one of Claims 1 to 13, **characterized in that** the counterspace (36) contains a compressible medium.

## Revendications

1. Pompe à piston comprenant
- un piston de pompe (14) mobile dans un boîtier de pompe (2),
- une soupape d'admission (22) et une soupape d'évacuation (24),
- une chambre de compression (20) dans le boîtier de pompe (2) entre la soupape d'admission (22) et la soupape d'évacuation (24) qui s'agrandit lors d'une course d'admission du piston de pompe (14) et se rétrécit lors d'une course de compression du piston de pompe (14),
- une chambre de pression (31) en aval derrière la soupape d'admission (24) avec une paroi souple (32, 32a, 32b) délimitant la chambre de pression (31) par rapport à une chambre opposée (36), une pression régnant dans la chambre de pression (31) sollicitant la paroi souple (32, 32a, 32b),
**caractérisée en ce que**
la paroi souple (32, 32a, 32b) présente une membrane souple élastique (32b) logée dans un corps souple élastique (32a), le corps souple élastique (32a) se compose d'un matériau élastique en caoutchouc et la membrane (32b) se compose d'un matériau élastique souple, le matériau élastique en caoutchouc étant nettement plus souple que le matériau élastique souple.

2. Pompe à piston selon la revendication 1,
**caractérisée en ce que**
la chambre de pression (31) et la paroi souple (32, 32a, 32b) sont disposées dans la zone de la soupape d'évacuation (24).

3. Pompe à piston selon la revendication 1 ou 2,
**caractérisée en ce que**
la chambre de pression (31) est en aval derrière la soupape d'évacuation (24).

4. Pompe à piston selon l'une des revendications 1 à 3,
**caractérisée en ce que**
la paroi souple (32, 32a, 32b) est logée dans un corps (2, 2.2, 2.3) fixe par rapport au boîtier et le corps souple élastique (32a) réalise l'étanchéité entre la membrane souple élastique (32b) et le corps (2, 2.2, 2.3) fixe par rapport au boîtier.

5. Pompe à piston selon l'une des revendications 1 à 4,
**caractérisée en ce que**
le corps souple élastique (32a) est disposé de façon annulaire au niveau d'une périphérie extérieure (32c) de la membrane souple élastique (32b).

6. Pompe à piston selon la revendication 5,
**caractérisée en ce que**
la membrane souple élastique (32b) possède une première face frontale et une deuxième face frontale et le corps souple élastique (32a), dans la zone de la périphérie extérieure (32c) de la membrane souple élastique (32b), entoure la périphérie extérieure (32c) jusque dans la zone d'au moins l'une des deux faces frontales de la membrane souple élastique (32b).

7. Pompe à piston selon l'une des revendications 1 à 6,
**caractérisée en ce qu'**
une zone partielle de la paroi souple (32, 32a, 32b) vient reposer contre une butée (44) fixe par rapport au boîtier.

8. Pompe à piston selon l'une des revendications 1 à 7,
**caractérisée en ce que**
dans la zone située à l'extérieur de son logement dans le corps souple élastique (32a), la membrane (32b) possède une épaisseur inférieure à celle dans la zone de son logement dans le corps souple élastique (32a).

9. Pompe à piston selon l'une des revendications 1 à 8,
**caractérisée en ce que**
la membrane (32b) est préformée dans la direction d'oscillation.

10. Pompe à piston selon l'une des revendications 1 à 9,
**caractérisée par**
une chambre d'évacuation (30) en aval derrière la soupape d'évacuation (24) et un étrangleur (39) en aval derrière la chambre d'évacuation (30).

11. Pompe à piston selon l'une des revendications 1 à 10,
**caractérisée en ce que**
la soupape d'évacuation (24) présente un siège de soupape (24a), un corps de fermeture (24b) et un ressort à lame (24d) sollicitant le corps de fermeture (24b) contre le siège de soupape (24a).

12. Pompe à piston selon l'une des revendications 1 à 11,
**caractérisée par**
un étranglement (25d) entre la soupape d'évacuation (24) et la chambre de pression (31).

13. Pompe à piston selon la revendication 12,
**caractérisée en ce que**
le ressort à lame (24d) forme l'étranglement (25d).

14. Pompe à piston selon l'une des revendications 1 à 13,
**caractérisée en ce que**
la chambre opposée (36) contient un fluide compressible.
